# EUROPEAN PATENT SPECIFICATION

(11) **EP 0 752 264 B1**
(45) Date of publication and mention of the grant of the patent: **12.12.2001**
(21) Application number: 96850133.8
(22) Date of filing: 05.07.1996
(51) Int. Cl.: B01D 53/00, B01D 53/78, B01D 53/18, B01D 53/64, F23J 15/04

(54) **Flue gas purifier**
Rauchgasreiniger
Purificateur de gaz brulé

(30) Priority: 06.07.1995 SE 9502460
(43) Date of publication of application: 08.01.1997
(73) Proprietor: MASARNA I MORA AB, 792 23 Mora (SE)
(72) Inventor: Hedberg, Sören, 790 43 Sollerön (SE); Bogg, Anders, 792 00 Mora (SE)
(74) Representative: Svanfeldt, Hans-Ake

(56) References cited:
- WO-A-88/09695
- WO-A-95/04589
- CH-A- 159 109
- GB-A- 2 258 623
- US-A- 5 078 759
- US-A- 5 330 725

## Description

The present invention relates to flue gas purification and more specifically to a flue gas purifier, which both improves the efficiency of the combustion installation and renders the conventional smoke stack unnecessary.

In a conventional combustion installation it is not possible to recover the whole amount of energy which in theory is possible to recover. The reason for this is that the flue gases leaving the boiler must have a minimum temperature of approximately 250°C to be able to rise up through the smoke stack and up into the air to such a height that the flue gases with their pollutions are being spread over a large enough area not to cause any damages.

Irrespective of the type of conventional flue gas purifier used today, the problem of the flue gases having to rise up through a smoke stack with a certain minimum velocity still remains and this requires that the said flue gases have a high temperature. This means that the recovery of heat from the flue gases can cause problems if the flue gas temperature from the boiler to the smoke stack is reduced to such an extent that it affects the outlet gas velocity. It is therefore normal that if the combustion of the fuel takes place at a temperature of 1000°C inside of the oven, the flue gas temperature in the boiler, where the heating takes place, is reduced by the heat carrying medium of the system, typically water, by 750°C. The flue gases from the boiler then have a temperature of 250°C, when flowing out from there.

Swedish Patent Application No. 9302567-4 (corresponding to WO-A-9504589) discloses a method for flue gas purification and a flue gas purifier for the carrying out of the method. According to the method the flue gases from the combustion installation are thereby made to pass through one and the same fluid, first under suction and then under pressure through said fluid. By sucking out the flue gases from the combustion installation by means of a pressure, which is variable depending on the pressure in the combustion installation, a favourable and balanced combustion is obtained.

The known flue gas purifier consists of a tank, which is divided into a pressure side and a suction side, which are not separated from each other, but the fluid can circulate between the compartments. The flue gases are first sucked into the tank and are then brought in contact with the fluid in the first compartment of said tank, which is the suction side, and are then led to the other compartment of the tank, which is the pressure side, where the flue gases continue in contact the fluid, then to be led out into the atmosphere. In order to realize pressure and suction the tank is thus divided into at least two compartments, whereby a pump first sucks the flue gases through the one part and then presses these through the second part. This thus concerns the accomplishment of purification of very large quantities of flue gas and low pressures using a smaller amount of energy than that which can be gained with the combustion installation.

This known flue gas purifier builds on the assumption that the flue gases are to be brought in as much contact with the fluid as possible. It had then been relied on that lapping in the tank would be advantageous for this purpose, and to accomplish this the two compartments were, then, in flow communication with each other at the bottom through a generous opening between the compartments. From the point of view of purification this flue gas purifier worked relatively well but it showed that the lapping, which caused regularly oscillating risings and lowerings of the water levels in the parts, meant that changes in pressure especially in the suction side could not be evened out by the pump, and came to affect the pressure in the combustion installation in a negative way. Thus the result was that puffs disturbing the combustion arose.

Such lapping and resulting changes in pressure could actually be compensated for in different ways, but such a compensation demands a special regulation technique and very powerful flue gas pumps, which would mean that the flue gas purifier would be too expensive both to produce and to run and thereby no economic alternative to other exhaust emission purification existing today. What is sought for is a flue gas purification, where the degree of purification is high and the used power for reaching this is small.

The aim of the present invention is to provide such a flue gas purifier with a high degree of purification and a small use of power. This aim is reached through a flue gas purifier as defined in the appended claims, which also disclose that which especially characterizes the invention.

The invention is described more closely in the following together with the appended drawings of which
Fig. 1 is a diagrammatical view from above of a heating installation equipped with a flue gas purifier according to the invention,
Fig. 2 is a diagrammatical longitudinal section of a flue gas purifier according to the invention, and
Fig. 3 is a diagrammatical view, partly in section, of a nozzle, through which the flue gases are fed into the fluid of the flue gas purifier.

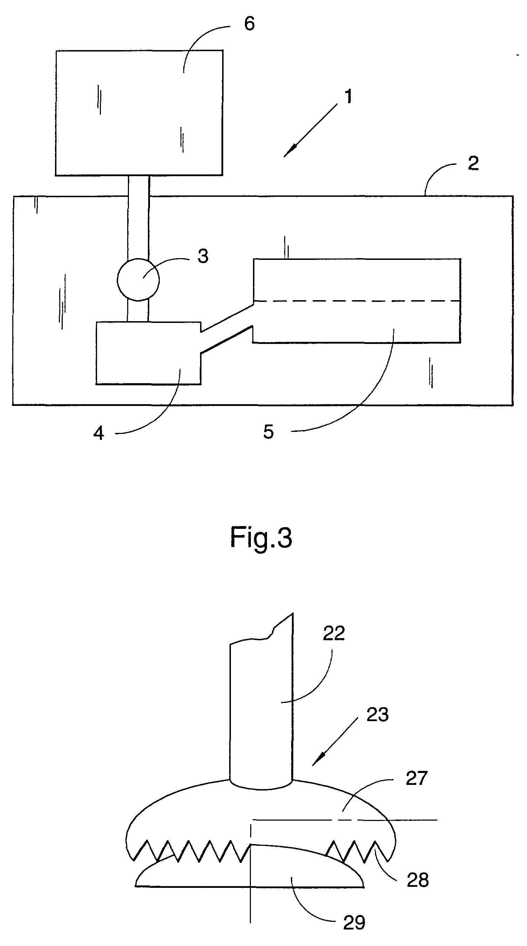

Fig. 1 shows a heating installation 1, in which flue gas purifier according to the invention is included. This installation 1 can be housed in a container 2, as shown, and comprises an oven 3, in which the combustion takes place, a boiler 4 where the exchange of the heat to the heat carrying medium takes place, and a flue gas purifier 5 according to the invention. Outside of the container 2 is located a fuel storage 6, from which fuel for the combustion, e.g. chip or oil, is fed to the oven 3. The embodiment of a flue gas purifier according to the invention described herein is applicable to practically any type of combustion installation, independent of its being housed in a container or otherwise arranged.

According to the invention the heat exchange in the boiler 4 is thus set, that the flue gas temperature from said boiler is approximately 120°C. Normally this temperature is not sufficient to feed out the flue gases as efficiently as is needed in the conventional case. However, 120°C is a temperature which is clearly sufficient to prevent damages to the boiler 4 and to the flue gas pipe from said boiler 4 to the flue gas purifier 5.

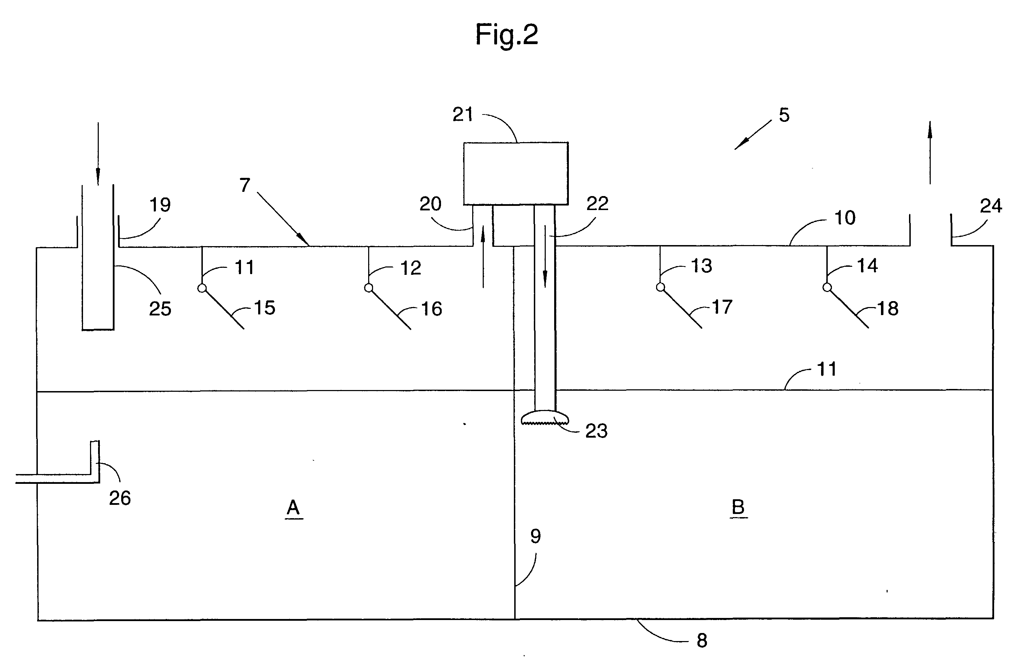

The diagrammatically shown embodiment of Fig. 2 of the flue gas purifier 5 according to the invention comprises a longitudinally extended, box shaped container 7 of for example welded sheet steel, which when seen from above is of a rectangular shape. Straight through the container 7, approximately in the middle of said container, a separating partition 9 extends, whereby the container 7 is divided into two from each other separated parts, A and B respectively.

The container 7 is filled with water or other suitable fluid to a level 11, which mainly corresponds to two thirds of the height of the container 7 above its bottom, and which is mainly the same in both parts, A and B respectively. To maintain a preferred amount of water in the container 7 level sensing and water filling and draining devices not shown, may be provided. Likewise, means for the provision of various chemicals to the water may be provided.

In the two parts A and B walls baffles 11-14 extend downwards towards the waterlevel 11 to approximately one third of the distance to this water level. The walls 11-14 extending across the container 7 are shown in Figure 2 to be two in each part A and B respectively, but this number may vary depending on for example the size and shape of the container 7. At the lower edges of the walls 11 - 14 pivotable wings 15 - 18 are mounted, having a width corresponding to approximately one third of the distance between the lid 10 and the water level 11. When the wings 15 - 18 are hanging vertically there is a free passage for flue gas flow between the lower edges of the wings 15 - 18 and the water level 11 amounting to approximately one third of the distance between the lid 10 and the water level 11. The partitioning in thirds in the above mentioned way is preferable but not critical, and may vary for different applications.

The wings 15 - 18 may consist of pieces of sheet metal, pivotably fixed to the walls 11 - 14, and, when appropriate, in a suitable way fixed in relation to the flow of the flue gas, as will be explained below, or may consist of for example sheets of rubber, being resilient in themselves.

At the end of part A opposite to the partitioning wall 9 an inlet 19 is provided for the flue gases from the boiler 4. At the partitioning wall 9 is provided a flue gas outlet 20 from part A, extending to a flue gas pump 21, being electrically driven. From this pump 21 a flue gas inlet 22 extends into part B, ending in a spray nozzle 23 adjacent to the partitioning wall 9, a piece below the water level 11. At the section of the part B opposite the partitioning wall 9 an outlet 24 to the atmosphere is provided for the purified flue gases.

The flue gas inlet 19, extending through the lid 10, comprises in the disclosed embodiment a pipe adjustable in height, or a nozzle 25, aiming the flue gases at the water level 11. The adjustability of this nozzle can be thus arranged, that the distance to the water level 11 is kept at a preset value by means of special devices. In order to provide the flue gases with the largest possible contact surface against the water the distance to the water level is set so that the water is made to whirl and be broken up into drops when the flue gases hit the water level. It has been found, however, that at times the water level is pushed away below the nozzle 25 thus showing a cup-shape, without the desired whirling and breaking up of the water taking place. In order to solve this problem an air inlet 26 may be arranged in the water directly below the nozzle 25. By providing this inlet 24 with a in itself relatively small amount of air under pressure the water level below the nozzle 25 is broken up and the desired wide contact surface between flue gas and the water is thus achieved.

By means of an electronic regulation equipment, not shown, the pump 21 is controlled by the pressures both in the boiler 4 and in compartment A in the container 7. In order to achieve a proper combustion, an underpressure of approximately 5 mm H₂O is to be maintained in the boiler 4, and this is normally achieved by a letting the pump 21 maintain an underpressure of approximately 10 mm H₂O in the compartment A of the container 7. Various factors of course influence the pressure in above all the boiler 4, but means of an appropriate regulation equipment the pump 21 can easily be controlled to maintain a pressure in the boiler 4 at a desired level, and depending on this regulation the pressure would be kept on an acceptable level in part A of the container 7. An appropriate pressure in the boiler 4 is essential for the combustion and the pressure in part A in the container 7 is less essential, but is constantly somewhat lower than the pressure in the boiler 4, since the pump 21 primarily evacuates part A of the container 7, and secondarily the boiler 4.

When the heating installation is running, flue gases flow or are sucked from the boiler 4 at a temperature of approximately 120°C, in through the nozzle 25 to compartment A of the flue gas purifier 5. Said flue gases there hit the water level 11 which is broken up, possibly with the help of the compressed air which at the same time is being provided through the inlet 26, and the flue gases are then brought in contact with the water and water particles. The flue gases are pressed towards the water level 11 by the wings 15 and 16 into contact with said water level during the flow towards the flue gas outlet 20. The pivotable wings 15 - 18 maintain a substantially even flow of flue gases through the compartments by increasing and decreasing the flow area, which thus contributes to the prevention of pressure variations. At the same time they direct the flue gases into contact with the water level 11.

From the compartment A the flue gases are sucked into the pump 21 and are pumped from there out through the flue gas inlet 22 into the compartment B. The flue gas inlet 22 ends in the nozzle 23, which is immersed a piece into the water. The flue gases are brought in contact with the water in the compartment B during heavy whirling when rising up through the water from the nozzle 23. The wings 17 and 18 press the flue gas flow down towards the water level before said flue gas is finally pressed out through the outlet 24 in the lid 10 to the atmosphere. The whirling or turbulence occurring in the different compartments, also results in a movement with the whole amount of fluid circulating in the compartments.

During the transfer through the container 7 the flue gases are broken up into small bubbles, the more and the smaller bubbles the better, which are brought in contact with the water in said container. Thereby the flue gases are cooled and flue dust and other contaminations in said flue gases are precipitated in the water. The flue gases contain approximately 40% steam, 15% of carbon dioxide and 35% of nitrogen gas when entering the container 7. After having passed said container they contain between 6 and 15% of carbon dioxide, where the amount varies depending on the pH value of the water, and 35% of nitrogen gas. The steam is condensed in the container 7 since the water in said container is at a temperature below 100°C, and the nitrogen gas is inert and natural and can therefore be let out into the air without problems, and the carbon dioxide let out is at a reasonable level.

In order to keep the temperature of the water in the container 7 as low as possible, preferably not exceeding 37°C, the container may include a heat exchanger, which partly cools the water, and partly provides the possibility of additional heat recovery apart from the heat recovery in the boiler.

In order to bind heavy metals in the flue gases the pH value of the water in the container 7 should be maintained at a value which exceeds 7. This may be achieved for example by means of a device, not shown, which supplies lime to the water and the dispensing of which is regulated by means of a conventional sensing device, monitoring that the pH value of the water corresponds to a preset value.

The contaminations precipitated in the water sink to the bottom and are fed out from there in connection with the change of water in the container, or at another suitable occasion. The sludge at the bottom of the container 7 may also be removed by means of slurry exhaustion.

One feature of the invention is that the flue gases are made to pass through a container with at least two compartments, A and B, being separated from each other concerning the underpressure and overpressure in the flue gas path through the container 7. By not having a water connection between the compartments A and B self-oscillation with the water is prevented. The turbulence with the water in the different compartments A and B sufficient to achieve the contact surface between the flue gases and the water, which is needed in order to purify the flue gases, is achieved by the flue gas purifier according to the invention.

In the embodiment of the flue gas purifier 5 of the invention shown in Fig. 2 the two compartments A and B are arranged in serial arrangement. It is however obvious that they might as well be arranged in a parallel arrangement. In such an embodiment heat exchanging devices may be arranged in the middle wall, something which of course is possible with the embodiment according to Fig. 2 as well, but the area of the wall is then for practical reasons substantionally smaller than it would be when the compartments A and B are placed parallel to each other. Heat exchangers can of course be located in other places in the container 7.

Fig. 3 shows a nozzle 23, partly in section, for the outlet of the flue gases below the water level, which is shown in Fig. 2. The nozzle 23 consists of a cup-shaped part 27, being open downwards and to which a flue gas pipe 22 is connected from above in the middle of the bowl 27. The edge 28 of the bowl 27 is toothed, which means that the flue gases pressed down through the pipe 22 are subdivided into a plurality of smaller flows, which rise up through the water towards the water level 11. This arrangement provides a heavy turbulence in the water and the flue gases meet a large water area. It has however proven to be the case that during certain circumstances a cushion of flue gas is formed in the bowl itself, which reduces the turbulence. To come to terms with this problem a slightly cup-shaped disc 29 with its arching upwards towards the flue gas inlet is placed in the cup 27 by means of elements not shown. This disc 29 has its highest point inside of the bottom of the teeth which form the edge 28 of the cup 27. To prevent the forming of said cushion of air by means of said disc 29 has unexpectedly shown to have a positive effect on the turbulence which is preferred to arise in connection with the letting out of the flue gases in the water.

To drive a pump in an example of the invention for 250 kW boiler approximately 2 kW is used. By lowering the flue gas temperature from approximately 250°C to approximately 35°C compared to a conventional installation, by means of heat exchanging in the flue gas purifier among other things, an energy gain of approximately 20% can be achieved, i.e. 50 kW. This gain of energy is more than enough to carry the costs for the flue gas purifier according to the invention. Should compressed air in the above mentioned way be supplied, this uses only approximately 500 W, which in this connection is marginal compared to the gain.

It can readily be realized that the flue gas purifier described herein is one of many possible embodiments. Thus the compartments A and B may be arranged in a number of different ways e.g. in a circle etc. and they may contain more as well as fewer compartments with more pumps without departing from the invention as defined in the appended claims.

## Claims

1. A flue gas purifier (5) for the purification of flue gases from a combustion installation (3, 4) comprising a closed container (7) with at least two compartments (A, B), containing a fluid, whereby the compartments (A, B) are separated from each other by a partition wall (9), a pump (21) being arranged to put the one compartment (A) under an underpressure and the other compartment (B) under a overpressure, whereby the underpressure compartment (A) receives the flue gases from the combustion installation (3, 4) through an inlet (19, 25) and the pump (21) leads the combustion gases over from the underpressure compartment (A) to the overpressure compartment (B), being provided with an outlet (24) for purified flue gases **characterized in that** the compartments (A, B) are separated from each other concerning the fluid in said compartments, while a flow path, bringing the flue gases in contact with the fluid in each compartment, extends throughout each compartment (A, B).

2. Flue gas purifier according to claim 1, **characterized in that** said flow path includes walls (11, 12, 13, 14) which extend from the lid (10) of the container (7) and in a direction towards the fluid level (11), substantially at right angles to the flow direction of the flue gases.

3. Flue gas purifier according to claim 2, **characterized in that** the walls (11 - 14) at their lower ends are pivotable.

4. Flue gas purifier according to any one of the claims 1 - 3, **characterized in that** a nozzle (26) for the supply of air is arranged immersed in the fluid under the flue gas inlet (19, 25) in the first compartment (A).

5. Flue gas purifier according to any one of the claims 1 - 4, **characterized in that** the outlet from the pressure side of the pump (21) in the second compartment (B) ends in a spray nozzle (23) below the fluid level (11), said nozzle (23) consisting of a cup-shaped part (27), the opening of which is to be directed towards the fluid and the edge (28) of which nozzle (23) is toothed, and a slightly cup-shaped disc (29), the arching of which extends from the opening into the cup-shaped part (27).

## Patentansprüche

1. Rauchgasreinigungsapparat (5) für die Reinigung von Rauchgasen aus einer Verbrennungsanlage (3, 4), der einen geschlossenen Behälter (7) umfasst mit mindestens zwei ein Fluidum enthaltenden Kammern (A, B), die voneinander durch eine Trennungswand (9) getrennt sind, sowie eine Pumpe (21), um in der einen Kammer (A) einen Unterdruck und in der anderen Kammer (B) einen Überdruck zu erzeugen, wobei der Unterdruckkammer (A) die Rauchgase aus der Verbrennungsanlage (3, 4) über einen Einlass (19, 25) zugeführt werden und die Pumpe (21) die Verbrennungsgase aus der Unterdruckkammer (A) in die mit einem Auslass (24) für gereinigte Rauchgase ausgerüstete Überdruckkammer (B), hinüberleitet, **dadurch gekennzeichnet, dass** die Kammern (A, B) voneinander bezüglich dem Fluidum in den Kammern getrennt sind, wobei sich eine Strombahn, auf der die Rauchgase mit dem Fluidum in jeder Kammer kontaktiert werden, durch jede Kammer (A, B) erstreckt.

2. Rauchgasreinigungsapparat nach Anspruch 1, **dadurch gekennzeichnet, dass** die Strombahn Wände (11,12,13,14) enthält, die sich im Wesentlichen im rechten Winkel zur Fliessrichtung der Rauchgase von dem Deckel (10) des Behälters (7) in Richtung auf das Fluidumniveau (11) erstrecken,.

3. Rauchgasreinigungseinrichtung nach Anspruch 2, **dadurch gekennzeichnet, dass** die Wänder (11-14) an ihrem unteren Ende verschwenkbar sind.

4. Rauchgasreinigungsapparat nach einem der Ansprüche 1 bis 3, **dadurch gekennzeichnet, dass** eine Düse (26) für die Zufuhr von Luft derart angeordnet ist, dass sie in dem Fluidum unterhalb des Rauchgaseinlasses (19, 25) in der ersten Kammer (A) eingetaucht ist.

5. Rauchgasreinigungseinrichtung nach einem der Ansprüche 1 bis 4, **dadurch gekennzeichnet, dass** der Auslass auf der Druckseite der Pumpe (21) in der zweiten Kammer (B) unterhalb des Fluidumniveaus (11) in eine Sprühdüse (23) mündet, wobei die Düse (23), deren Öffnung auf das Fluidum gerichtet werden kann, aus einem tassenförmigen Teil (27) besteht, und die Kante (28) der Düse (23) gezahnt ist, und die Düse eine leicht tassenförmige Scheibe (29) aufweist, deren Wölbung sich von der Öffnung in den tassenförmigen Teil (27) erstreckt.

## Revendications

1. Un purificateur de fumée (5) pour la purification de fumée à partir d'une installation de combustion (3, 4) comprenant un container fermé (7) possédant au moins deux compartiments (A, B), contenant un fluide, au moyen duquel les compartiments (A, B) sont séparés l'un de l'autre par une paroi de séparation (9), une pompe (21) étant disposée pour mettre le compartiment un (A) en sous-pression et l'autre compartiment (B) en surpression, au moyen de laquelle le compartiment (A) en sous-pression reçoit la fumée à partir de l'installation de combustion (3, 4) à travers une entrée (19, 25) et la pompe (21) guide les gaz issus de la combustion à partir du compartiment (A) en sous-pression vers le compartiment (B) en surpression, étant muni d'une sortie (24) pour les fumées purifiées **caractérisé en ce que** les compartiments (A, B) sont séparés l'un de l'autre concernant les fluides dans lesdits compartiments, tandis qu'un chemin d'écoulement, mettant les fumées en contact avec le fluide dans chaque compartiment, s'étend d'un bout à l'autre de chaque compartiment (A, B).

2. Purificateur de fumée selon la revendication 1, **caractérisé en ce que** ledit chemin d'écoulement inclut des parois (11, 12, 13, 14) qui s'étendent à partir du couvercle (10) du container (7) et en direction du niveau de fluide (11), sensiblement à angles droits par rapport à la direction d'écoulement de la fumée.

3. Purificateur de fumée selon la revendication 2, **caractérisé en ce que** les parois (11-14) au niveau de leur extrémité basse sont pivotables.

4. Purificateur de fumée selon l'une quelconque des revendications précédentes, **caractérisé en ce qu**'une buse (26) pour l'apport en air est disposée en immersion dans le fluide sous l'entrée de fumée (19, 25) dans le premier compartiment (A).

5. Purificateur de fumée selon l'une quelconque des revendications 1- 4, **caractérisé en ce que** la sortie près du côté de pression de la pompe (21) dans le second compartiment (B) se termine par une buse de vaporisation (23) au-dessous du niveau de fluide (11), ladite buse (23) consistant en une partie en forme de coupe (27), dont l'ouverture doit être dirigée vers le fluide et le bord (28) de la buse (23) est dentelée, et consistant en un disque légèrement en forme de coupe (29), dont la formation en voûte s'étend de l'ouverture à l'intérieur de la partie en forme de coupe (27).
